# EUROPEAN PATENT SPECIFICATION

(11) **EP 0 807 775 B1**
(45) Date of publication and mention of the grant of the patent: **27.06.2001**
(21) Application number: 97107951.2
(22) Date of filing: 15.05.1997
(51) Int. Cl.: F16J 15/32

(54) **A seal system having mechanical members coupled for relative rotation**
Dichtungssystem mit relativ ineinander drehenden mechanischen Teile
Système d'étanchéité avec des pièces mécaniques en rotation l'une par rapport à l'autre

(30) Priority: 17.05.1996 IT TO960111 U
(43) Date of publication of application: 19.11.1997
(73) Proprietor: SKF INDUSTRIE S.p.A., 10121 Torino (IT)
(72) Inventor: Vignotto, Angelo, 10100 Torino (IT); Peretti, Pietro, Antonio, 10060 Piscina (IT)
(74) Representative: Plebani, Rinaldo

(56) References cited:
- EP-A- 0 388 258
- EP-A- 0 458 123
- DE-A- 3 806 928
- DE-A- 3 822 816
- US-A- 2 830 858

## Description

The present invention relates to a seal system according to the preamble of claim 1. Such a system is known, for example, from EP-A-388 258.

Several seal systems for members coupled for relative rotation are known in the prior art, in particular, European Patent Application N°525.288 describes a seal system for a member which is rotatable about a fixed support, in which a first screen is fixed to the support and a second screen is securely fixed to the rotatable member; each of the two screens is constituted by a metal reinforcement at least partly covered by a layer of elastomeric rubber co-moulded therewith; the fixed screen has an annular sealing lip, which in use is pressed against a radial surface of the rotatable screen by means of a helical spring closed in a loop in a groove around the sealing lip; the fixed screen also has two opposing axial projections which act as axial spacers cooperating with the reinforcement of the second screen, which is U-shaped with two radial walls; the movable screen is fitted on the rotatable member with the interposition of a layer of elastomeric rubber with several circumferential radially projecting ribs which engage the rotatable member with a degree of interference so as to increase the stability of the axial position and the drive torque of the rotatable screen.

Although this prior art seal system provides an effective seal, it has the disadvantage of providing only limited precision with regard to axial positioning owing to the fact that neither the support nor the rotatable member has an axial reference abutment; during assembly, in fact, the seal system may shift from its correct position owing to a slight give in the rubber interposed between the reinforcements and their corresponding seats.

The object of the present invention is thus to provide a seal system for members coupled for relative rotation which is free of the disadvantages of prior art systems and which, in particular, can be correctly positioned in a predetermined stable axial position which is independent of operating conditions affecting it.

In accordance with the object defined above, a seal system is provided having the features of claim 1.

According to a preferred aspect of the invention, the seal system is further characterised in that the said portion of the said layer of elastomeric material has at least one continuous annular radially projecting rib engageable with the said at least one groove so as to ensure that the said second reinforcement is accurately and stably positioned on the said second member.

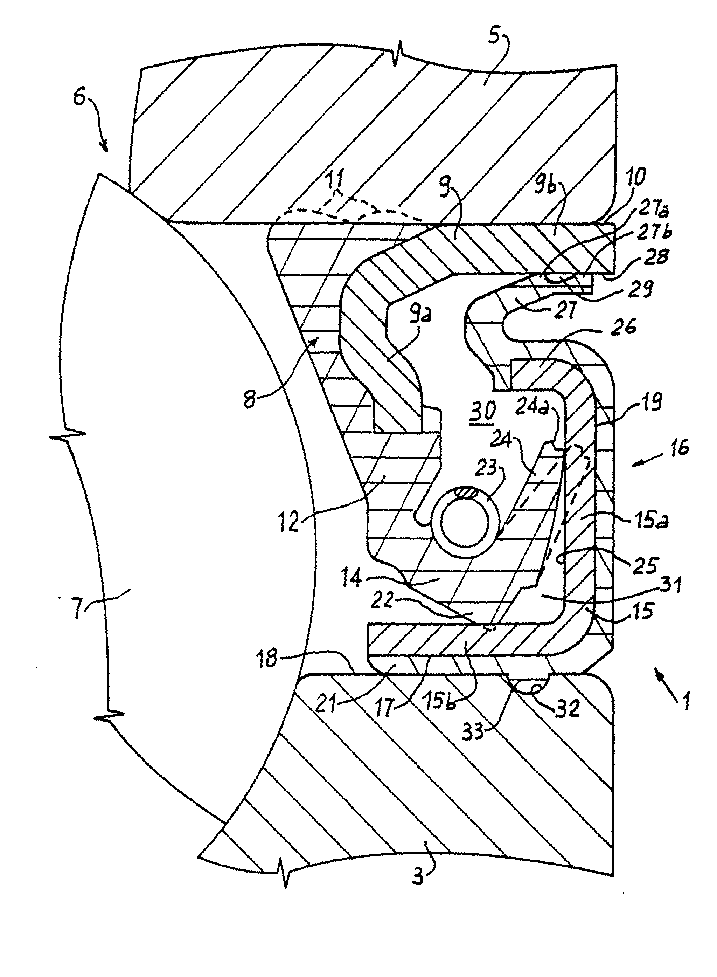

This and other characteristics of the invention will become clearer from the following description of a preferred embodiment, provided purely by way of non-limitative example, with reference to the appended drawing, which is a diametral section of the seal system according to the present invention.

With reference to the drawing, a seal system according to the invention for protecting the mechanically coupled surfaces of two relatively rotatable mechanical members is indicated 1; in the example under consideration, the two rotatable members are represented by two rings 3 and 5 of a rolling element bearing 6, in particular a ball bearing 7, it being evident that the following description is valid for any pair of mechanical members, mechanically coupled for relative rotary movement.

In the description which follows it is supposed, without however limiting the scope of the invention, that the inner ring 3 is rotatable while the outer ring 5 is stationary.

The system 1 includes a first screen 8 constituted by a metal reinforcement 9 fixed to the stationary outer ring 5; a substantially radial portion 9a of the reinforcement 9 supports a packing 12, formed of rubber, or other elastomer, made by a known method of co-moulding or vulcanization together with the reinforcement core; the packing 12 includes a sealing member 14 with a resilient annular lip which cooperates with a second screen 16 fixed to the inner ring 3.

The reinforcement 9 also includes a cylindrical portion 9b, integral with the radial portion 9a and securely keyed directly onto the outer ring 5, with no interposed elastomer; the packing 12 has several projections 11, indicated by a dotted line in the drawing, which extend beyond the cylindrical surface 10 between the cylindrical portion 9b and the outer ring 5 so as to be compressed against the outer ring 5 at the time of mounting of the seal system 1 on the bearing 6.

The rotatable reinforcement 15 is annular, with a cross-section of substantially L-shape which is thus constituted by a radial portion 15a integral with a cylindrical portion 15b bent at a right angle to form a cylindrical surface 17 for coupling with a corresponding cylindrical surface 18 of the inner ring 3 of the bearing 6.

An outer surface 19 of the reinforcement 15 facing, that is, away from the balls 7 of the bearing 6, is covered with a protective layer 20 of the aforesaid rubber or elastomer; in particular, a portion 21 of the layer 20 also extends onto the cylindrical coupling surface 17, acting as an intermediate cushioning layer and thus simplifying the operation of mounting the screen 16 on the ring 3.

In the example under consideration, the sealing member 14 includes a first lip 22 acting as a radial seal, held on the cylindrical portion 15b of the reinforcement 15 with a degree of radial interference by the force of a helical spring 23 wound in a closed loop in a groove formed in the sealing member 14; an inclined appendage 24 extends from the first lip 22 to form a second lip 24a acting as an axial seal and, in use, held against an inner surface 25 of the radial portion 15a of the reinforcement 15 as a result of resilient deformation of the appendage 24 which is obtained by accurate axial positioning of the screen 16 during the mounting of the seal system 1 on the bearing 6.

In the drawing, the rest positions of the lip 22 and of the appendage 24 are indicated by a broken line so as to illustrate qualitatively that a degree of interference is required to ensure a good tight seal.

The layer 20 also extends beyond a free end 26 of the radial portion 15a of the screen 15 so as to form a further resilient radial-seal lip 27 which slides with a degree of interference on the inner cylindrical surface 28 of the reinforcement 9; in particular, the lip 27 is formed with two annular edges 27a and 27b axially separated by an annular hollow 29; in use, an air vortex is created in the hollow 29 as a result of the relative rotation of the lip 27 and the sliding surface 28, thereby providing an additional, dynamic seal effect; the lips 22, 24 and 27 delimit in use two annular cavities 30 and 31, inside the seal system 1, which are filled with a suitable type of lubricating oil, operable both to retain any impurities which might have managed to overcome the barriers of the lips 22, 24 or 27 and to lubricate and cool the sliding area between the lips 22, 24 and 27 and the corresponding contact surfaces.

It is clear that the effectiveness of the axial seal provided by the lip 24a is ensured as long as it remains compressed against the surface 25, this pressure being dependent on whether or not the screen 16 was in the correct axial position when initially assembled.

In order to ensure that the screen 16 is fitted on the ring 3 in an accurate axial position that will prove stable over time, the seal system of the invention provides at least one peripheral groove, formed in the cylindrical surface 18 of the ring 3 which faces the screen 16; the groove 32 may be circular or helical, with one or more turns; the cross-section of the groove 32 may be of various shapes, for example semi-circular, as shown in the drawing, or rectangular, triangular etc.

For preference, the intermediate cushioning layer defined by the portion 21 of the layer 20 has in turn at least one corresponding radially projecting rib 33 operable to snap-engage the groove (or grooves) 32 of the ring 3; in order to ensure that the rib 33 fits perfectly in the corresponding groove 32, the shape and outline of the cross-section of the rib/ribs 33 is/are made to match that/those of the groove/grooves 32 so that they mate.

In use, the seal system of the invention makes it possible to ensure that the two screens 8, 16 are correctly positioned with respect to one another while, at the same time, ensuring absolute fluid-tight sealing between the two elements 3, 5 in relative motion; this fluid-tight assembly is ensured by the packing 12 and its portions 11 which sealingly cooperate with the ring 5 and by the portion 21 of the layer 20 which sealingly cooperates with the ring 3, as well, obviously, as by the lips 22, 24a, 27; the correct position of the screen 8 is ensured by the routine interference positioning of the reinforcement 9 and that of the screen 16 by the presence, according to the invention, of the groove 32 in the surface of the ring 3, designed to cooperate with the portion 21 of the elastomeric layer 20: as it is mounted on the ring 3, again with interference, the elastomer forming this cushioning layer is deformed (it is compressed and stretched in an axial direction by the movement fitting it on the ring 3), however, instead of giving rise to resilient reactions which cause uncertainty in the final axial positioning of the screen 16, as occurs with prior art systems, the deformed elastomeric material is free to extend into the groove 32 where it expands partly to engage it, thus ensuring not only the elimination of resilient reactions which could alter the relative positioning of the screens 8, 16, but a direct, mechanical engagement between the elastomeric portion 21 and the groove 32, thereby preventing the screen 16 from shifting even under the action of possible external shocks.

The same effect is obtained when a projection 33 is formed in the portion 21 of the elastomeric layer 20: in this case, the elastomeric material which is deformed during its assembly still extends towards the groove 32 but (as the latter is already filled under undeformed conditions by the projection 33) simply remains in a state of compression, thereby increasing both the fluid-tight sealing action and the mechanical anchoring action of the elastomeric portion 21. Finally, a correct axial positioning ensures that the lips 22, 24a, 27 are in their optimum operating condition, thus further enhancing the sealing action.

## Claims

1. A seal system (1) having two mechanical members (3, 5) coupled for relative rotation, which further comprises a seal assembly constituted by a first screen (8) securely fixed to a first (5) of said coupled members and by a second screen (16) securely fixed to a second (3) of said coupled members, said first screen (8) having an annular sealing member (14) with a sliding lip acting to cooperate interferingly with said second screen (16), said second screen (16) including a metal reinforcement (15) constituted by a radial wall (15a) joined integrally with a cylindrical portion (15b) and covered with a layer (20) of elastomeric material vulcanised onto said reinforcement, said cylindrical portion (15b) being mounted interferingly on a cylindrical surface (18) of said second member (3), facing said cylindrical portion (15b) of said second screen (16), with the interposition of a portion (21) of said layer (20) of elastomeric material, the seal system including at least one peripheral groove (32) formed on said cylindrical surface (18) of said second member (3) facing said cylindrical portion (15b) of said second screen (16), which groove (32) is engageable by at least part of said portion (21) of said layer (20) of elastomeric material so as to ensure an accurate and stable axial position of said second screen (16) relative to said first screen (8); characterised in that said cylindrical portion (15b) of said second screen (16) extending in axial direction beyond said groove (32) on both sides of said groove (32).

2. A seal system according to Claim 1, characterised in that said cylindrical surface (18) of said second member (3) comprises two cylindrical contact surfaces having the same diameter, said two contact surfaces being located at the opposite sides of said groove (32) and being axially spaced from one another by said groove (32); at least one of said two contact surfaces presenting an axial extension greater than the axial width of said groove (32).

3. A seal system according to Claim 1 or 2, characterised in that said groove (32) is a circular groove.

4. A seal system according to Claim 1 or 2, characterised in that said groove (32) is a helical groove.

5. A seal system according to Claim 1 or 2, characterised in that said portion (21) of said layer (20) of elastomeric material has at least one radially projecting rib (33), operable to engage said at least one groove (32) in order to ensure that said second screen (16) is in an accurate and stable axial position relative to said second coupled member (3).

6. A seal system according to Claim 5, characterised in that said projection (33) is a continuous annular projection.

## Patentansprüche

1. Dichtungssystem, das zwei mechanische Elemente, die relativ zueinander drehbar gekoppelt sind, und weiterhin eine Dichtungsvorrichtung aufweist, die durch einen ersten Schild (8), der fest an einem ersten (5) der beiden gekoppelten Elemente angebracht ist, und einen zweiten Schild (16) gebildet ist, der fest an dem zweiten (3) der beiden gekoppelten Elemente angebracht ist, wobei der erste Schild (8) ein ringförmiges Dichtelement (14) mit einer Dichtlippe besitzt, die mit Übermaß mit dem zweiten Schild (16) zusammenwirkt, der eine metallische Verstärkung (15) aufweist, die durch eine einstückig mit einem zylindrischen Abschnitt (15 b) verbundene radiale Wandung (15 a) gebildet und mit einer Schicht (20) aus aufvulkanisiertem elastomerem Material überzogen ist, der zylindrische Abschnitt (15) mit Übermaß auf einer zylindrischen Fläche (18) des zweiten Elements (3) montiert ist, die dem zylindrischen Abschnitt (15 b) des zweiten Schildes (18) unter Zwischenlage eines Bereiches (21) der Schicht (20) aus elastomerem Material zugewandt ist, und das Dichtungssystem wenigstens eine auf der dem zylindrischen Abschnitt (15 b) des zweiten Schildes (16) zugewandten zylindrischen Fläche (18) des zweiten Elements (3) ausgebildete Umfangsnut (32) aufweist, welche mit wenigstens einem Teil des Bereiches (21) der Schicht (20) aus elastomerem Material in Eingriff bringbar ist, um eine genaue und stabile axiale Stellung des zweiten Schildes (16) relativ zu dem ersten Schild (8) sicherzustellen, **dadurch gekennzeichnet,** daß der zylindrische Abschnitt (15 b) des zweiten Schildes (16) sich in axialer Richtung zu beiden Seiten über die Nut (32) hinaus erstreckt.

2. Dichtungssystem nach Anspruch 1, **dadurch gekennzeichnet,** daß die zylindrische Fläche (18) des zweiten Elements (3) zwei zylindrische Kontaktflächen aufweist, die denselben Durchmesser haben, auf verschiedenen Seiten der Nut (32) angeordnet und durch die Nut (32) axial zueinander beabstandet sind, wobei wenigstens eine der beiden Kontaktflächen eine axiale Erstreckung aufweist, die größer als die axiale Breite der Nut (32) ist.

3. Dichtungssystem nach Anspruch 1 oder 2, **dadurch gekennzeichnet,** daß die Nut (32) eine kreisförmige Nut ist.

4. Dichtungssystem nach Anspruch 1 oder 2, **dadurch gekennzeichnet,** daß die Nut (32) eine schraubenförmige Nut ist.

5. Dichtungssystem nach Anspruch 1 oder 2, **dadurch gekennzeichnet,** daß der Bereich (21) der Schicht (20) aus elastomerem Material wenigstens eine radial vorspringende Rippe (33) aufweist, die in die wenigstens eine Nut (32) einrückbar ist, um sicherzustellen, daß sich der zweite Schild (16) in einer genauen und stabilen axialen Position relativ zu dem zweiten gekoppelten Element (3) befindet.

6. Dichtungssystem nach Anspruch 5, **dadurch gekennzeichnet,** daß der Vorsprung (33) ein durchgängiger ringförmiger Vorsprung ist.

## Revendications

1. Système de joint (1) comportant deux éléments mécaniques (3, 5) couplés pour une rotation relative, qui comprend de plus un ensemble de joint constitué par un premier écran (8) fermement fixé à un premier (5) desdits éléments couplés et par un deuxième écran (16) fermement fixé à un deuxième (3) desdits éléments couplés, ledit premier écran (8) comportant un élément d'étanchéité annulaire (14) avec une lèvre coulissante agissant de façon à coopérer afin d'interférer avec ledit deuxième écran (16), ledit deuxième écran (16) comprenant un renfort métallique (15) constitué par une paroi radiale (15a) réunie d'une seule pièce à une partie cylindrique (15b) et recouvert par une couche (20) de matériau élastomère vulcanisé sur ledit renfort, ladite partie cylindrique (15b) étant montée de façon à interférer sur une surface cylindrique (18) dudit deuxième élément (3), regardant vers ladite partie cylindrique (15b) dudit deuxième écran (16), avec l'interposition d'une partie (21) de ladite couche (20) de matériau élastomère, le système de joint comprenant au moins une rainure périphérique (32) formée sur ladite surface cylindrique (18) dudit deuxième élément (3) regardant vers ladite partie cylindrique (15b) dudit deuxième écran (16), cette rainure (32) pouvant s'engrener avec au moins une partie de ladite partie (21) dé ladite couche (20) de matériau élastomère de façon à garantir une position axiale précise et stable dudit deuxième écran (16) par rapport audit premier écran (8) ; caractérisé en ce que ladite partie cylindrique (15b) dudit deuxième écran (16) s'étend dans une direction axiale au-delà de ladite rainure (32) sur les deux côtés de ladite rainure (32).

2. Système de joint selon la revendication 2, caractérisé en ce que ladite surface cylindrique (18) dudit deuxième élément (3) comprend deux surfaces de contact cylindriques ayant le même diamètre, lesdites deux surfaces de contact étant disposées sur les côtés opposés de ladite rainure (32) et étant axialement espacées l'une de l'autre par ladite rainure (32) ; au moins l'une desdites deux surfaces de contact présentant un prolongement axial plus grand que la largeur axiale de ladite rainure (32).

3. Système de joint selon la revendication 1 ou 2, caractérisé en ce que ladite rainure (32) est une rainure circulaire.

4. Système de joint selon la revendication 1 ou 2, caractérisé en ce que ladite rainure (32) est une rainure hélicoïdale.

5. Système de joint selon la revendication 1 ou 2, caractérisé en ce que ladite partie (21) de ladite couche (20) de matériau élastomère comporte au moins une nervure saillant radialement (33), pouvant agir de façon à s'engrener avec ladite rainure au nombre d'au moins une (32) afin de garantir que ledit deuxième écran (16) soit dans une position axiale précise et stable par rapport audit deuxième élément couplé (3).

6. Système de joint selon la revendication 5, caractérisé en ce que ladite saillie (33) est une saillie annulaire continue.
